# EUROPEAN PATENT APPLICATION

(11) **EP 3 502 922 A1**
(43) Date of publication of application: **26.06.2019**
(21) Application number: 18210822.5
(22) Date of filing: 06.12.2018
(51) Int. Cl.: G06F 17/24, G06F 17/21

(54) **METHOD FOR PREVIEWING A DOCUMENT DURING EDITING, AND A COMPUTER PROGRAM PRODUCT AND APPARATUS THEREFOR**

(30) Priority: 19.12.2017 EP 17208589
(71) Applicant: OCE Holding B.V., 5914 CA Venlo (NL)
(72) Inventor: STEUX, Jean Marc C.A., 5914 CA Venlo (NL)
(74) Representative: OCE IP Department

(57) **Abstract**

Method for previewing a document during editing, the document comprising graphical objects, the method comprising the steps of: receiving from a remote server a bitmap, the bitmap being a rendering of at least part of the document; displaying the received bitmap; receiving a selection event; receiving an editing operation; based on the selection event selecting among the graphical objects in the document at least one graphical object; based on the editing operation and the at least one selected graphical object, determining whether to execute the editing operation on the at least one selected graphical object locally, or remotely; if the editing operation is to be executed remotely: sending to the remote server an identifier identifying the at least one selected graphical object and specifying the editing operation; and receiving from the remote server at least one update bitmap; if the editing operation is to be executed locally: generating at least one update bitmap by executing the editing operation on at least part of the received bitmap; updating the displayed bitmap with the update bitmap.

## Description

### FIELD OF THE INVENTION

The present invention generally pertains to a method for previewing a document during editing of the document. The invention also pertains to a computer program product that performs the steps of such method. Furthermore, the present invention pertains to an apparatus comprising a processor, a display, a user input module, and a communication module, the apparatus configured to preview a document during editing of the document.

### BACKGROUND ART

It is commonly known that documents can be created and edited digitally on computers. For example, a software application like Microsoft Word™ may be used to create and edit a document and store it in Word's own file format. A software application like Adobe Acrobat™ may be used to create and edit Adobe Portable Document Format™ (PDF) files. Although these kind of software applications were typically run on desktop or laptop computers, nowadays alternative apps are available that allow creating, editing, or viewing such documents on computationally lower powered devices such as smartphones and tablets. Some of these apps (native apps or web apps) do the actual manipulation of document data and the generation of previews of the document (or part of the document) locally. However, some file formats are rather complex (PDF is a good example) and rendering accurate previews may be too demanding for such devices. Two known alternatives to deal with that issue is to either lower rendering accurateness or to rely on a remote server (cloud rendering service) to do the rendering and send the renders back to the mobile device.

The first alternative, lower rendering accurateness, is applied in several popular JavaScript PDF rendering libraries compromising accurateness in favour of performance. This approach may be acceptable for some applications such as quickly reading a document on the go. However, for some other applications, for example pre-press previewing and editing for job preparation in professional production environments require accurately rendered previews to check for potential rendering and printing artefacts. Therefore, for these latter category of applications a lower rendering accurateness is an unacceptable disadvantage.

The second alternative, remote rendering, has the disadvantage that the renders may be large (approximately 0.5 GB for a 1200 dpi 4 colour channels render) and require some considerable time to transfer over a network as well as a considerable amount of storage to (temporarily) store on the mobile device.

It is an object of the present invention to overcome or at least mitigate at least part of the disadvantages of the prior art.

### SUMMARY OF THE INVENTION

In a first aspect of the present invention, a method is provided for previewing a document during editing, the document comprising graphical objects, the method comprising the steps of: receiving from a remote server a bitmap, the bitmap being a rendering of at least part of the document; displaying the received bitmap; receiving a selection event; receiving an editing operation; based on the selection event selecting among the graphical objects in the document at least one graphical object; based on the editing operation and the at least one selected graphical object, determining whether to execute the editing operation on the at least one selected graphical object locally, or remotely; if the editing operation is to be executed remotely: sending to the remote server an identifier identifying the at least one selected graphical object and specifying the editing operation; and receiving from the remote server at least one update bitmap; if the editing operation is to be executed locally: generating at least one update bitmap by executing the editing operation on at least part of the received bitmap; updating the displayed bitmap with the update bitmap.

The document may originally be stored on the remote server or locally. If the document does not comprise a substantial number of larger bitmaps, for example in the case of scanned documents, the exchange of the document itself is not necessarily a burden on the network transfer. On the other hand, it may not be necessary to exchange the complete document. For example, in the case of a PDF document, individual pages can be easily exchanged as PDF is a page independent format.

The remote server will render a first view of the document, for example a render of the first page of the document, or the last page that was shown in the user interface during an earlier session. The first view may be generated spontaneously by the remote server, or upon explicit request by the local device. The remote server sends the render (as a bitmap) to the local device which displays the received bitmap (or part of it) in its user interface.

The user selects one or more graphical elements of the document by clicking a position in the render bitmap displayed in the user interface. This mapping mechanism is well known in the field of user interfaces and is for sake of brevity not described in more detail. Note that selecting one or more graphical elements may also comprise selecting one or more pages of the document.

The user also selects an operation to perform on the selected one or more elements. Next, the local device determines whether it can easily perform the operation locally, or whether to rely on the remote server to perform the operation. This determination may be based on some operations being preconfigured to be executed locally and others remotely, or based on an estimate of the costs of the two options, for example a cost estimate of the computational load or the network load. For example, rotating a complete page (or multiple pages) can typically be done locally. However, changing the colour of a complex shape may typically be too involved for the local device and may be executed by the remote server.

What is important is that the determination whether to execute locally or remotely is an explicit determination. The local device does not exclusively perform all operations itself or exclusively have the remote server perform all operations. Some operations will be performed locally, while others will be performed remotely. This may depend on the kind of the operation (for example changing a transparency property of a graphical object is typically computationally expensive and will be executed remotely), but also on the operand, i.e. the graphical object, or parameters for the operation (for example a rotation by an angle which is a multiple of 90° can be easily performed by using an address or index mapping technique when accessing the bitmap stored in memory while rotation by other angles are computationally expensive).

If the operation is to be performed remotely, the local device informs the remote server of the operation to perform and the at least one graphical object to act upon. Some operations might require further parameters to be specified such as a rotation angle in the case of a rotation operation. The remote server will perform the rendering again. It may either render a complete new page, or only a part of the page that is affected by the operation. It will return to the local device an update bitmap. Again this update bitmap may be a complete replacement for the originally rendered bitmap, or only a replacement of a part. Furthermore, the remote server providing the update bitmap replacing only a part may be based on the rendering process only generating such a "partial" update bitmap, or the rendering process generating a bitmap that is actually a complete replacement, but then the remote server comparing this new render with the original render and generating a "partial" update bitmap that only covers a part of the new render, namely a part that comprised all the differences compared to the original render.

In case the update bitmap only represents part of the render, the remote server typically needs to also provide the local device with the coordinates of the update bitmap to allow the local device to combine the initial bitmap correctly with the update bitmap.

In the end, regardless whether the update bitmap was obtained from the remote server or generated locally, the received bitmap displayed is updated with the update bitmap in order to show the results of the operation to the user allowing the user to assess whether the resulting document is as desired.

It is observed that some operations can be performed without local access to the document comprising the graphical objects. For example, if a complete page is to be rotated, this can be simply realised by rotating the complete bitmap for the page without the local device having any knowledge about graphical objects on the page or even any knowledge about pages at all. However, if a single object is to be rotated the local device should at least be aware of such object. Generally, having the full document locally available provides the most flexibility. In general this is also feasible as many documents do not mainly comprise bitmaps and therefore transferring the document prior to executing a method according to the present invention in order to make the document available at both the local device and the remote server typically has a relatively low impact compared to transferring the rendered bitmaps. (Note that this typically does not apply to scanned documents as these mainly comprise bitmaps.)

In a further aspect according to the invention a method is provided, wherein updating the displayed bitmap comprises replacing pixels in the received bitmap with corresponding pixels from the update bitmap.

Replacing may for example comprise mapping the pixels of the update bitmap onto the received bitmap and thus generating a merged bitmap. For example, the update bitmap may only replace part of the received bitmap and the remote server sends the update bitmap accompanied with coordinates of a reference corner of the update bitmap. The pixel in the reference corner of the update bitmap will then replace the pixel in the received bitmap. The other pixels in the update bitmap will replace those pixels in the received bitmap that have coordinates equalling the coordinates received from the remote server offset by the coordinates of the pixel in the update bitmap. In other words, the absolute position of a pixel in the update bitmap is used as a relative position in the received bitmap taking the coordinates received from the remote server as the reference position.

When this replacement of pixels is done in-place, it has the advantage of reduced memory usage, but with the disadvantage of not having the option of locally undoing the operation. The latter can be overcome by storing the replaced part of the original, received bitmap.

According to a further aspect of the present invention a method is provided, wherein updating the displayed bitmap comprises overlaying the received bitmap with the update bitmap.

Compared to the previous aspect, this aspect has the advantage of making it easy to locally undo an operation at the expense of using more memory. Here both the received bitmap as well as the update bitmap are stored individually. The displayed bitmap is generated by generating a stack of overlaid bitmaps, the received bitmap at the bottom and the update bitmap (partly) covering it. Such overlaying of bitmaps and displaying them is typically an operation that can be easily left to a Graphical Processing Unit (GPU).

In a further aspect of the present invention a method is provided, further comprising the steps of: receiving a further editing operation; based on the further editing operation and the at least one selected graphical object, determining whether to execute the further editing operation on the at least one selected graphical object locally, or remotely; if the further editing operation is to be executed remotely: sending to the remote server an identifier identifying the at least one selected graphical object and specifying the further editing operation; and receiving from the remote server at least one further update bitmap; if the editing operation is to be executed locally: generating at least one further update bitmap by executing the further editing operation on at least part of the received bitmap and/or received update bitmap; updating the displayed bitmap and/or update bitmap with the further update bitmap.

In this case a second editing operation is performed on the same graphical object. This is basically realised by stacking the received bitmap, the update bitmap, and the further update bitmap. This can be extended to multiple operations.

In another aspect according to the present invention, a method is provided, further comprising the steps of: in addition to receiving a further editing operation, receiving also a further selection event; based on the further selection event selecting among the graphical objects in the document at least one further graphical object; based on the further editing operation and the at least one selected further graphical object, determining whether to execute the further editing operation on the at least one selected further graphical object locally, or remotely; and executing the further editing operation locally or remotely accordingly; updating the displayed bitmap and/or update bitmap with the further update bitmap.

Now the second editing operation is performed on another graphical object. Again this can be extended to multiple operations.

Now the real power of the present invention becomes clearer. A whole sequence of operations can be handled by stacking the results of all the individual operations. It does not matter whether those operations act upon the same graphical object or different graphical objects, whether some operations are executed locally and other operations are executed remotely.

In a further aspect of the present invention a method is provided, wherein both the editing operation and the further editing operation are performed remotely, and the displayed bitmap is updated by displaying the further update bitmap overlaid over the update bitmap, which is itself overlaid over the received bitmap. Subsequent operations executed remotely result in a sequence of bitmaps that are basically stacked upon each other.

In another aspect of the present invention a method is provided, wherein the editing operation is performed locally and the further editing operation is performed remotely, the method further comprising the step of: determining whether the further update bitmap needs to undergo the editing operation, and if so, performing the editing operation on the further update bitmap, and wherein the edited further update bitmap is overlaid over the updated received bitmap.

A subsequent remotely executed operation is again stacked on the result of a previous local operation. However, some local operations require a similar operation on the received result. For example, if the first operation is a page rotation, the originally received page bitmap can easily be rotated locally. However, the remote server is not necessarily informed of the page being rotated and might therefore send further update bitmaps that have not been rotated yet. This can be easily 'corrected' by locally applying the first operation to the further update bitmap.

In another aspect according to the present invention a method is provided, wherein the editing operation is performed locally and the further editing operation is performed remotely, and wherein, even if the editing operation is to be executed locally, in addition to locally generating at least one update bitmap by executing the editing operation on at least part of the received bitmap, sending to the remote server an identifier identifying the at least one selected graphical object and specifying the editing operation.

In this case the remote server is still informed of the local operation and can already perform the first operation without rendering the result and sending the update bitmap. When the further operation is received, the first operation is already accounted for and the further operation can be performed as well as its result (the further updated bitmap) applied without the local device needing to perform the first operation to the further update bitmap too.

In another aspect of the present invention a method is provided, wherein the editing operation is performed remotely, and the further editing operation is performed locally, wherein the further update bitmap is generated by overlaying the update bitmap over the received bitmap and performing the further editing operation on the thus stacked update bitmap and received bitmap.

In again another aspect of the present invention a method is provided, wherein both the editing operation and the further editing operation are performed locally, and the displayed bitmap is updated by subsequently performing the editing operation and the further operation to the received bitmap and thus generating the update bitmap and further update bitmap.

It is not strictly necessary that the update bitmap, which is an intermediate product is still stored after the further update bitmap has been generated. Keeping it though has the advantage of making it easy to undo part of a sequence of operations at the expense of using more memory.

In one embodiment according to the present invention a computer program product embodied on a non-transitory computer readable medium is provided that, if executed on a processor, performs the steps of any of the methods described above.

In another embodiment, an apparatus is provided comprising a processor, a display, a user input module, and a communication module, the apparatus configured to: receive through the communication module from a remote server a bitmap, the bitmap being a rendering of at least part of the document; display on the display the received bitmap; receive through the user input module a selection event; receive through the user input module an editing operation; based on the selection event select among the graphical objects in the document at least one graphical object; based on the editing operation and the at least one selected graphical object, determine whether to execute the editing operation on the at least one selected graphical object locally, or remotely; if the editing operation is to be executed remotely: send through the communication module to the remote server an identifier identifying the at least one selected graphical object and an operation identifier specifying the editing operation; and receive through the communication module from the remote server at least one update bitmap; if the editing operation is to be executed locally: generate at least one update bitmap by executing on the processor the editing operation on at least part of the received bitmap; update the displayed bitmap with the update bitmap.

In a further embodiment an apparatus is provided wherein the apparatus above is a mobile computing device such as a smartphone, a tablet computer, or a laptop computer.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying schematical drawings which are given by way of illustration only, and thus are not limitative of the present invention, and wherein:
- Fig. 1: shows an overview of an example system wherein the present invention may be implemented;
- Fig. 2: shows a typical architecture of a device in the system of Fig. 1;
- Fig. 3: shows a user interface of a software program implementing the present invention;
- Figs. 4A-C: show a page of a document as shown in the user interface of Fig. 3 in consecutive stages according to the method of the present invention;
- Figs. 5A-F: show in more detail how the images of the page of Figs. 4A-C are being acted upon by the method according to the present invention; and
- Fig. 6: shows a flow chart of a method according to the present invention.

### DETAILED DESCRIPTION OF THE DRAWINGS

The present invention will now be described with reference to the accompanying drawings, wherein the same reference numerals have been used to identify the same or similar elements throughout the several views.

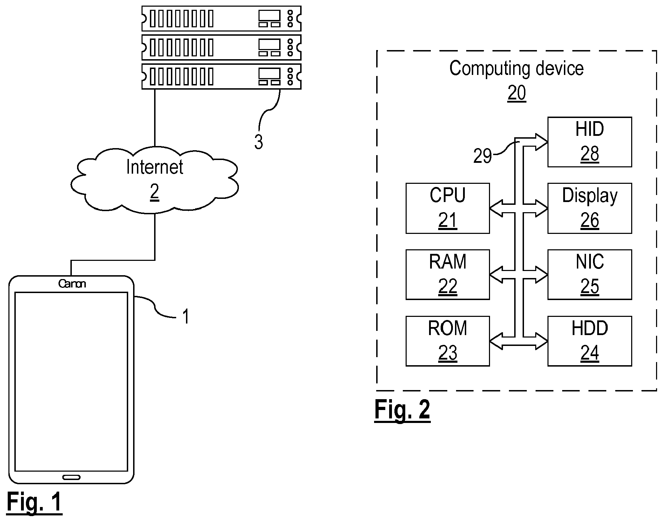

A typical system (Fig. 1) wherein the invention may be implemented comprises a mobile computing device such as a tablet computer 1. The tablet computer 1 is connected to a network, for example the internet 2. Furthermore, one or more server computers 3 are also connected to the internet 2 and provide services to a variety of computing devices including the tablet computer 1. For example, one of the server computers 3 may provide a cloud storage service that allows the tablet computer 1 to upload a file such as a document over the Internet 2 to the cloud storage server. If the user of the tablet computer 1 needs to access the document at a later moment, for example to view the document, the tablet computer 1 retrieves the file comprising the document, or part thereof and displays it on its display to the user. This way, the cloud storage service virtually extends the storage capacity of the tablet computer 1, and as long as the cloud storage service is reachable through the internet 2 for tablet computer 1, the tablet computer 1 has the storage provided by the cloud storage service at its disposal. The server computers 3 may further provide other services, such as print services allowing a document to be printed. A document to be printed may be uploaded directly from the tablet computer 1 through the internet 2 to a print server 3 for printing, but alternatively the document may be stored in a cloud storage server and the tablet computer 1 only provides a document identifier to the print server. The document identifier allows the print server to request the specific document directly from the storage service without the document first needing to be transferred from the cloud storage service to the tablet computer 1 and subsequently from the tablet computer 1 to the print service. In order for the print service to proof to the cloud storage that it is authorised to retrieve the document on behalf of the tablet computer 1, the tablet computer 1 typically provides the print service with a token (for example a one-time authentication code) that the print service subsequently uses to retrieve the document and submit it to a printer.

Before printing a document, the user may still wish to preview the document and possibly make some changes. Traditionally, editing of documents was done on desktop computers or laptop computers. However, document editing software for (computationally) lower powered devices are common nowadays. In such a scenario, the tablet computer 1 may either upload a locally stored document to the print server or provide a document identifier and an authorisation token to the print server allowing the latter to retrieve the document from a storage service. The software for previewing and editing the document may be a pre-installed application on the tablet computer 1, or may be a web application, for example written in JavaScript and executing in the context of a web browser, that is provided by the print server. The pre-installed application and the web application (or at least the client side thereof) are executed by the tablet computer 1. Meanwhile, the print server executes its own software in order to communicate with the tablet computer 1 and serve requests from the software executing on the tablet computer 1. For example, the tablet computer 1 will be sending operations to the print server and the print server will execute the operations, render a new preview of part of the document and send the render back to the tablet computer 1 for displaying.

The tablet computer 1 typically comprises the hardware components that are found in general computing devices 20 (Figure 2). The tablet computer comprises a Central Processing Unit (CPU) 21 for executing program code. Such program code is typically stored in a secondary memory such as a Hard Disk Drive (HDD) 24, Solid State Drive (SSD), or in the case of a tablet computer, usually a flash memory. Such secondary memory or alternatively a Read-only Memory (ROM) 23 store an operating system to control the computing device 20 and orchestrate all the process running in the components of the computing device 20. The CPU 21 further acts upon data that is during operation temporarily stored in Random Access Memory (RAM) 22 for fast access, and in the secondary memory to survive shut downs of the device 20. Furthermore, a display 26 allows the computing device 20 to present information to a user of the computing device 20. A Human Interface Device (HID) 28 is responsible for receiving input from the user. In a tablet computer 1, the display 26 and the HID 28 are typically combined in a single touch screen display allowing the user to provide input by pressing on objects displayed on the display 26. To allow the computing device 20 to communicate with other devices, it comprises a Network Interface Card (NIC) 25 for example in the form of a WiFi radio or a mobile telephony modem to connect to respectively a wireless computer network or a wireless telephony network, such as GSM or UMTS. The components of the computing device 20 are connected through a bus 29 allowing the components to exchange data, for example the CPU 21 retrieves data from RAM 22, operates upon it and stores the results again in RAM 22.

The software for previewing a document to be edited is executed on the tablet computer 1, regardless of whether that software itself is pre-installed in the secondary (nonvolatile) memory of the tablet computer 1, or downloaded from the print server through the NIC 25. From hereon the software running on the tablet computer 1 will be referred to as the client software.

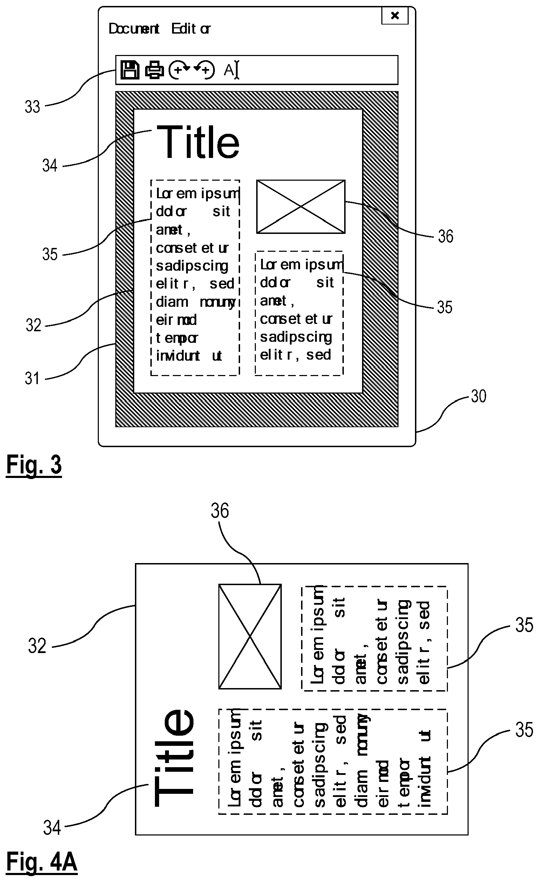

The client software displays a user interface (Figure 3) for previewing and editing a document, for example a PDF document. A window 30 comprises a preview area 31 for displaying previews of (part of) the document, for example a preview of a page 32 of the document. Note that on tablet computers, applications typically run full-screen. Therefore, window 30 is in such cases omitted and only the contents of the window is shown.

The preview of the page 32 may comprise graphical objects such as a title 34, text columns 35 and images 36. These graphical objects may be compound objects that themselves comprise more elementary graphical objects. For example, a text object such as the title 34 may comprise of multiple character objects. A column may comprise of multiple lines of text, each line comprising of multiple characters. The characters themselves, or actually the glyphs of the characters may comprise of even more elementary graphical objects, such as lines and curves.

The user interface further comprises widgets to control the application. For example, a toolbar 33 may be provided with icons for several operations such as saving the current state of the document, printing the document, rotating clockwise, rotating anti-clockwise, editing text, etc.

Note that in the present invention part of the method is executed locally by the tablet computer (most notably the operations determined to be executed locally, but also the displaying of the resulting bitmaps) by means of the client software, while other parts of the method are executed remotely (most notably the operations determined to be executed remotely, but also the rendering of the initial bitmap). The latter will be referred to as the server software.

When the user starts the client software, first a display may be shown (not shown in the drawings) to allow for the selection of a document to preview and edit. The document may be a locally stored document or a document stored in a cloud storage service. After the document has been selected, the document will be loaded. It is advantageous that the document is available to both the client software as well as the server software. The latter needs it to be able to render the document; the former may need it to allow for the selection of graphical objects on pages of the document and operating on them instead of only being able to operate on complete pages. Alternatively, the client software can send selection coordinates to the server software allowing for selection of graphical objects without the client software having access to the document itself. The server software might return information on how to represent a selection in the user interface such as the coordinates of a bounding box with manipulation handles. Furthermore, the server software may return information on the selected graphical object to allow the client software to execute a selected operation locally, for example by returning to the client software that the whole page has been selected.

Once the server software has loaded the document, it will render an initial view of the document, for example the first page of the document and will make the render available to the client software. The client software will receive the rendered bitmap and display it in the preview area 31. In order to edit the document, the user will select graphical objects in the preview area 31 for example by touching the title 34. A selected graphical object will typically be denoted in the user interface by some form of highlighting, for example by changing the colour of the object, placing a bounding box around the object or by other means. Next, an operation may be selected by the user by touching one of the icons in the toolbar 33 or manipulating handles on the bounding box of the selected graphical object.

Upon triggering an operation, the client software will determine whether to execute the operation locally or remotely.

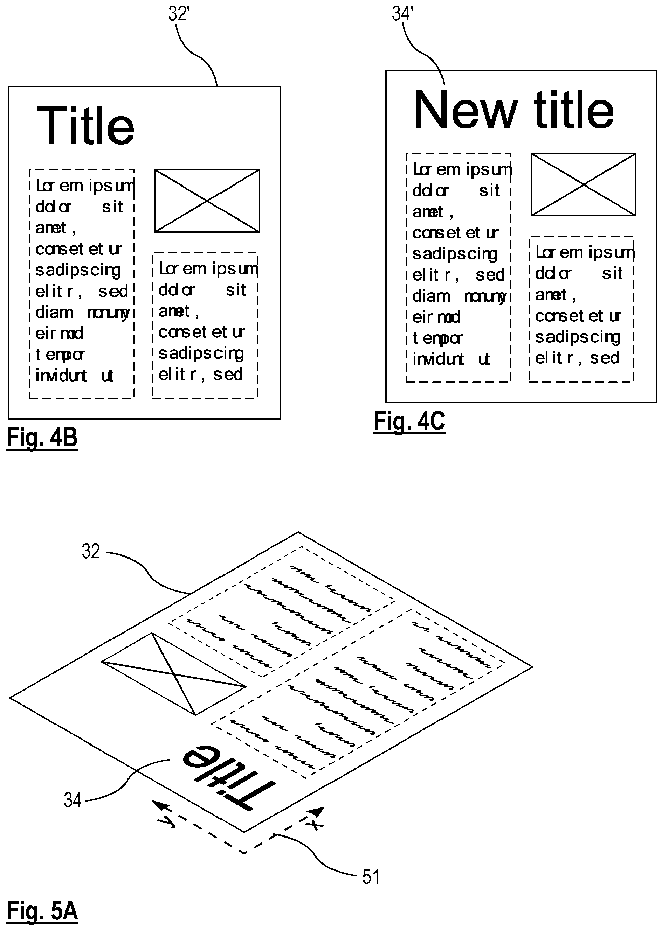

For example, Figure 4A shows a document as originally loaded and shown in the preview area 31. It comprises a preview of the page 32 with on the page the title 34, text columns 35, and an image 36. However, the user notices that the document is rotated and wishes to correct this. Therefore, he first selects the whole page (the graphical object) by touching an unoccupied area of the page 32 and then touches a rotate icon in order to inform the client software of the intended operation and the graphical object to operate upon. The client software determines that it is a full page that is to be rotated and determines that it can easily perform the operation locally. It thus manipulates the PDF document itself by rotating the selected page, but also rotates the rendered bitmap it received initially from the server software itself. It can easily do this as rotating the rendered bitmap is only a relatively straightforward one-to-one mapping. The displayed originally received bitmap is then replaced on the display with rotated bitmap resulting in an updated page preview 32' as is shown in Figure 4B.

Subsequently, the user decides he is not totally happy with the title and decides to change it. Therefore, he touches the title to select the text object and touches a text icon to instruct the client software to edit the text. After entering a new title, the client software has to determine whether to execute this operation locally, or remotely. Now, the operation is more computationally expensive. Actually, the client software should perform a new render to just determine what part of the bitmap will be affected by the change. Furthermore, anti-aliasing (on the pixel level of the pre-press render, not necessarily the display level), transparency effects, fonts, etc. have to be taken into account. Traditional software would now fall back on less accurate rendering techniques. According to the present invention, the client software will now determine that it should rely on the server software to do an accurate render. Therefore, the client software sends a request to the server software specifying the graphical object to operate upon (the title 34), the operation to perform (text replacement), and a parameter to the operation (the text of the new title).

The server software running on the remote server now replaces the text in the PDF document and subsequently renders the page again (or at least re-renders the part affected). This results in an update bitmap that is returned to the client software. The client software now updates the display again with the new bitmap received from the remote server and now shows the again updated preview page with its updated title 34' (Fig. 4C).

This process is shown again in more detail in the next Figures.

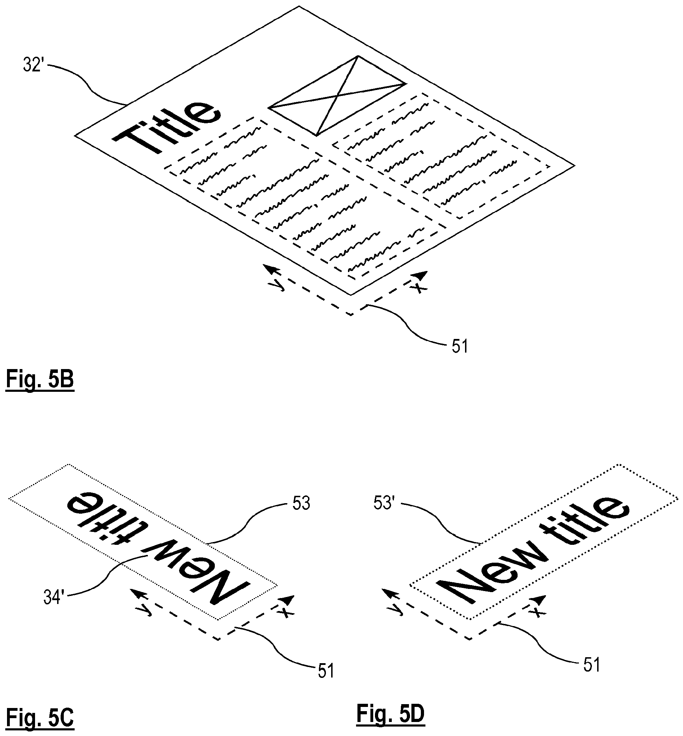

Initially, the unfortunately rotated page 32 (Fig. 5A) is rendered by the server software, sent to the client software, and displayed. Two axes 51 x and y are shown. In PDF the origin of the coordinate system is at the bottom left of a page (a page extends into the first quadrant of a Cartesian coordinate system).

The user selects the page 32 and triggers rotation clockwise (90°). The client server rotates the page in the actual PDF document. Furthermore, it rotates the bitmap originally received from the server software and displays the rotated bitmap (Fig. 5B) in the preview area 31. As can be checked with the displayed axes 51, the page is now rotated.

In a next step, the user selects the title 34, selects a text edit icon and edits the text of the title. The client software now determines that editing text requires an actual rendering action and requests the text editing operation from the server software by sending an identifier identifying the title 34, the selected operation (text replacement), and a parameter to the operation (the new title).

The server software replaces the text of the title 34 with the text of the new title 34' in the PDF. Next, it re-renders. Suppose the render produces a completely new page bitmap. The server software might now compare the originally rendered bitmap with the new bitmap and determine that only a rectangle tightly surrounding the new title contains changed pixels, and therefore the server software only sends the pixels in this rectangular area to the client software accompanied by the coordinates of the lower left corner. Fig. 5C shows the further update bitmap 53 with the new title 34' received by the client software. As the axes 51 give away, the new title 34' is not oriented correctly, because the rotation of the page was done locally. So, the client software knows that it should first rotate the further update bitmap 53 before it can be merged. Therefore, the client software executes the rotation and obtains a rotated version 53' of the further update bitmap as can be seen by means of the axes 51.

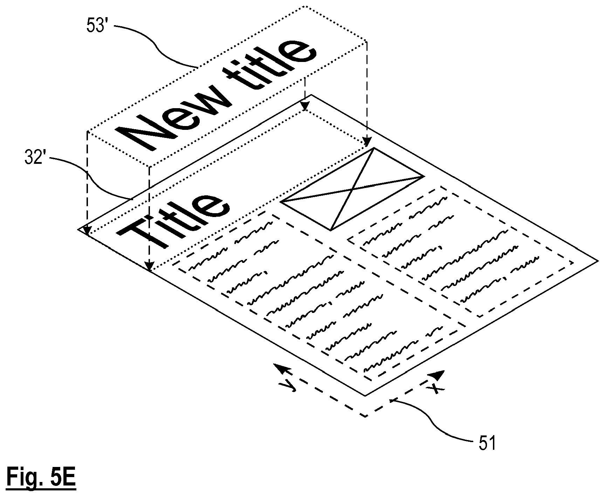

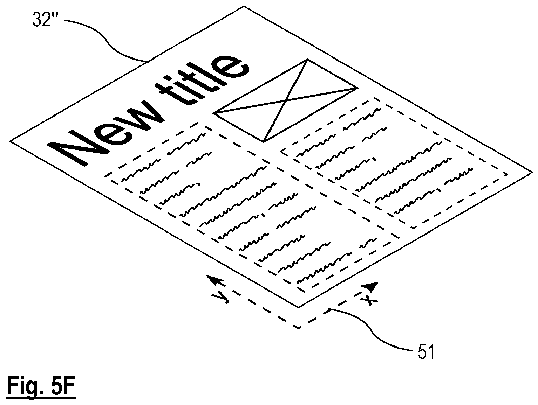

Finally, the rotated version 53' of the further update bitmap is stacked and merged (Fig. 5E) with the rotated preview page 32' to obtain the final page preview 32" of Fig. 5F. Note that from a mathematical point of view, the page rotation is not a pure rotation, but a rotation combined with a translation, the latter to keep the origin of the coordinate system at the bottom left corner. This should be taken into account to derive the proper coordinates for merging the further update bitmap.

Note that alternatively, the client software could have informed the server software of the local rotation. In that case, the server software could have changed the PDF document without re-rendering. Upon re-rendering for the further operation, the text replacement, the rotation of the page would have already been accounted for which makes it much easier for the client software to merge the further update bitmap.

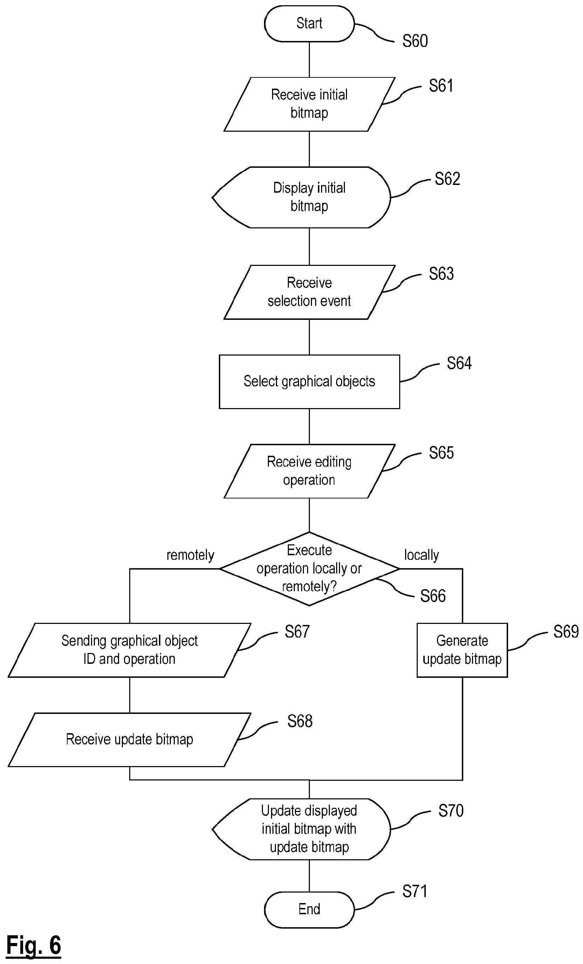

A method according to the present invention is further depicted in the flow diagram of Fig. 6. The method starts S60 and the client software receives S61 an initial bitmap from the server software with the original render. The client software displays S62 the bitmap on the display. The client software receives S63 a selection event due to the user selecting a graphical object in the user interface. Subsequently, the client software selects S64 the graphical object. Next, the client software receives S65 an editing operation due to the user selecting an operation by clicking or touching a command icon. The client software now determines S66 whether the operation is to be executed locally or remotely.

If the client software determines that the operation should be executed remotely, it sends S67 an identifier for the graphical object together with the selected operation and if required including parameters to the operation to the server software running on the remote server. In return it receives S68 from the server software an update bitmap. Alternatively, if in step S66 it was determined that the operation could be performed locally, the client software would locally generate S69 the update bitmap instead. After the update bitmap has been generated, either locally or remotely, the displayed initial bitmap is updated S70 with the update bitmap and therewith the method ends S71.

In an alternative embodiment, the rendered bitmaps are sent by the server software to the client software as tiled images. This allows the update bitmap to be sent as a number of updated tiles.

Furthermore, as especially the initial rendered bitmap, but also subsequent update bitmaps that comprise a full page, may be quite large resulting in a noticeable waiting time for the user, the bitmaps may be sent with progressive resolution allowing the user to get an early idea of the page. (Typically, pre-press reviews have a much higher resolution (600 dpi, 1200 dpi, 2400 dpi) than displays of mobile devices. Therefore, using progressive resolution, the user quickly gets a sharp preview of the whole page only having to wait longer at higher zoom levels).

Furthermore, the server software might initially not send the image in full resolution, but might first send a lower resolution and only send "sub-pixels" once the user starts zooming in. This can be done only for the area the user actually zooms into, for example making using of the above mentioned image tiles.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. Method for previewing a document during editing, the document comprising graphical objects, the method comprising the steps of:
- receiving from a remote server a bitmap, the bitmap being a rendering of at least part of the document;
- displaying the received bitmap;
- receiving a selection event;
- receiving an editing operation;
- based on the selection event selecting among the graphical objects in the document at least one graphical object;
- based on the editing operation and the at least one selected graphical object, determining whether to execute the editing operation on the at least one selected graphical object locally, or remotely;
- if the editing operation is to be executed remotely:
• sending to the remote server an identifier identifying the at least one selected graphical object and specifying the editing operation; and
• receiving from the remote server at least one update bitmap;
- if the editing operation is to be executed locally:
• generating at least one update bitmap by executing the editing operation on at least part of the received bitmap;
- updating the displayed bitmap with the update bitmap.

2. Method according to claim 1, wherein updating the displayed bitmap comprises replacing pixels in the received bitmap with corresponding pixels from the update bitmap.

3. Method according to claim 1, wherein updating the displayed bitmap comprises overlaying the received bitmap with the update bitmap.

4. Method according to claim 1, 2, or 3, further comprising the steps of:
- receiving a further editing operation;
- based on the further editing operation and the at least one selected graphical object, determining whether to execute the further editing operation on the at least one selected graphical object locally, or remotely;
- if the further editing operation is to be executed remotely:
• sending to the remote server an identifier identifying the at least one selected graphical object and specifying the further editing operation; and
• receiving from the remote server at least one further update bitmap;
- if the editing operation is to be executed locally:
• generating at least one further update bitmap by executing the further editing operation on at least part of the received bitmap and/or received update bitmap;
- updating the displayed bitmap and/or update bitmap with the further update bitmap.

5. Method according to claim 4, further comprising the steps of:
- in addition to receiving a further editing operation, receiving also a further selection event;
- based on the further selection event selecting among the graphical objects in the document at least one further graphical object;
- based on the further editing operation and the at least one selected further graphical object, determining whether to execute the further editing operation on the at least one selected further graphical object locally, or remotely; and executing the further editing operation locally or remotely accordingly;
- updating the displayed bitmap and/or update bitmap with the further update bitmap.

6. Method according to claim 4 or 5, wherein both the editing operation and the further editing operation are performed remotely, and the displayed bitmap is updated by displaying the further update bitmap overlaid over the update bitmap, which is itself overlaid over the received bitmap.

7. Method according to claim 4 or 5, wherein the editing operation is performed locally and the further editing operation is performed remotely, the method further comprising the step of:
determining whether the further update bitmap needs to undergo the editing operation, and if so, performing the editing operation on the further update bitmap, and
wherein the edited further update bitmap is overlaid over the updated received bitmap.

8. Method according to claim 4 or 5, wherein the editing operation is performed locally and the further editing operation is performed remotely, and wherein, even if the editing operation is to be executed locally, in addition to locally generating at least one update bitmap by executing the editing operation on at least part of the received bitmap, sending to the remote server an identifier identifying the at least one selected graphical object and specifying the editing operation.

9. Method according to claim 4 or 5, wherein the editing operation is performed remotely, and the further editing operation is performed locally, wherein the further update bitmap is generated by overlaying the update bitmap over the received bitmap and performing the further editing operation on the thus stacked update bitmap and received bitmap.

10. Method according to claim 4 or 5, wherein both the editing operation and the further editing operation are performed locally, and the displayed bitmap is updated by subsequently performing the editing operation and the further operation to the received bitmap and thus generating the update bitmap and further update bitmap.

11. A computer program product embodied on a non-transitory computer readable medium that, if executed on a processor, performs the steps of the method of any of the preceding claims.

12. Apparatus comprising a processor, a display, a user input module, and a communication module, the apparatus configured to:
- receive through the communication module from a remote server a bitmap, the bitmap being a rendering of at least part of the document;
- display on the display the received bitmap;
- receive through the user input module a selection event;
- receive through the user input module an editing operation;
- based on the selection event select among the graphical objects in the document at least one graphical object;
- based on the editing operation and the at least one selected graphical object, determine whether to execute the editing operation on the at least one selected graphical object locally, or remotely;
- if the editing operation is to be executed remotely:
• send through the communication module to the remote server an identifier identifying the at least one selected graphical object and an operation identifier specifying the editing operation; and
• receive through the communication module from the remote server at least one update bitmap;
- if the editing operation is to be executed locally:
• generate at least one update bitmap by executing on the processor the editing operation on at least part of the received bitmap;
- update the displayed bitmap with the update bitmap.

13. Apparatus according to the previous claim wherein the apparatus is a mobile computing device such as a smartphone, a tablet computer, or a laptop computer.
